(19) Europäisches Patentamt
European Patent Office
Office européen des brevets

(11) **EP 3 208 629 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(51) Int Cl.:
**G01S 1/08** (2006.01)     **G08G 3/00** (2006.01)

(21) Anmeldenummer: **17155393.6**

(22) Anmeldetag: **09.02.2017**

(54) **POSITIONIERUNG MIT AIS-DATENÜBERTRAGUNG**

POSITIONING WITH TRANSMISSION OF AIS DATA

POSITIONNEMENT AVEC LA TRANSMISSION DE DONNEES AIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2016 DE 102016102959**

(43) Veröffentlichungstag der Anmeldung:
**23.08.2017 Patentblatt 2017/34**

(73) Patentinhaber: **Deutsches Zentrum für Luft- und Raumfahrt e.V.**
**51147 Köln (DE)**

(72) Erfinder:
• **Plass, Simon**
  **82229 Seefeld (DE)**
• **Dammann, Armin**
  **86899 Landsberg a. Lech (DE)**

(74) Vertreter: **Gramm, Lins & Partner**
**Patent- und Rechtsanwälte PartGmbB**
**Freundallee 13a**
**30173 Hannover (DE)**

(56) Entgegenhaltungen:
• **Gregory Johnson ET AL: "Feasibility Study of R-Mode using AIS Transmissions. Investigation of possible methods to implement a precise GNSS independent timing signal for AIS transmissions", , 29. August 2014 (2014-08-29), XP055389556, Gefunden im Internet: URL:http://www.iala-aism.org/content/uploads/2016/08/accseas_r_mode_feasibility_study_ais_transmissions_part_2.pdf [gefunden am 2017-07-10]**
• **QING HU ET AL: "Development of an Automatic Identification System Autonomous Positioning System", SENSORS, Bd. 15, Nr. 11, 11. November 2015 (2015-11-11), Seiten 28574-28591, XP055389796, CH ISSN: 1424-8220, DOI: 10.3390/s151128574**

**Beschreibung**

Die Erfindung betrifft ein Verfahren zur AIS-Datenübertragung mittels AIS-standardkonformen AIS-Signalen, wobei zu übertragende AIS-Daten senderseitig in AIS-Signale gewandelt und über einen Hauptkanal ausgesendet werden, wobei die AIS-Signale in einem AIS-Empfänger empfangen und in empfangene AIS-Daten zurückgewandelt werden, wobei senderseitig ein Positionierungssignal über einen zusätzlich zum Hauptkanal vorhandenen Hilfskanal ausgesendet wird, das empfängerseitig eine Bestimmung der eigenen Geoposition des AIS-Empfängers ermöglicht. Die Erfindung betrifft ferner einen dementsprechenden AIS-Sender, einen dementsprechenden AIS-Empfänger sowie einen AIS-Transceiver. Die Erfindung betrifft ferner ein System von AIS-Sendern und AIS-Empfängern gemäß Anspruch 12 und ein Computerprogramm gemäß den Ansprüchen 13 und 14.

Ein gattungsgemäßes Verfahren ist bekannt aus:

Gregory Johnson ET AL: "Feasibility Study of R-Mode using AIS Transmissions. Investigation of possible methods to implement a precise GNSS independent timing signal for AIS transmissions", 29. August 2014.

AIS ist die Abkürzung für das Automatic Identification System, das im Schiffsverkehr zur Kommunikation von Schiffen untereinander und mit Stationen an Land oder in der Luft oder im Weltraum genutzt wird. Die AIS-Datenübertragung wird von den Schiffen z.B. zur Kollisionsvermeidung genutzt. Die AIS-Signale werden für das allgemeine Lagebild am Schiff und an der Küste verwendet. Ferner kann ein globales Lagebild der Schiffsbewegungen erstellt werden, wobei die AIS-Signale auch per Satellit empfangen werden können. Für die AIS-Datenübertragung werden zu übertragende AIS-Daten senderseitig in AIS-Signale gewandelt, z.B. durch Modulation, und die AIS-Signale per Funk übertragen. Hierfür werden zwei Kanäle im UKW-Seefunkbereich genutzt, nämlich AIS1 = Kanal 87B und AIS2 = Kanal 88B. Die Reichweite der Funkübertragung ist daher durch die Ausbreitungsbedingungen im UKW-Frequenzbereich festgelegt.

Allgemein ist in der Schiffsführung eine zunehmende Abhängigkeit von der Satellitennavigation erkennbar. Infolgedessen ist mit Risiken zu rechnen, wenn das verwendete globale Navigationssystem gestört ist oder ausfällt oder wenn die Empfangsbedingungen unzureichend sind.

Der Erfinder liegt daher die Aufgabe zugrunde, die Schiffsführung im Hinblick auf solche Probleme in der Satellitennavigation sicherer zu gestalten.

Diese Aufgabe wird durch ein Verfahren zur AIS-Datenübertragung gemäß Anspruch 1 gelöst. Die Erfindung hat den Vorteil, dass unter Nutzung der AIS-Datenübertragung, die weiterhin AIS-standardkonform erfolgt, eine zusätzliche, von Satellitennavigationssystemen unabhängige Möglichkeit der Bestimmung der eigenen Geoposition eines AIS-Empfängers und damit eines mit einem solchen AIS-Empfänger ausgerüsteten Schiffs zu ermöglichen. Hierbei werden erfindungsgemäß die AIS-Signale so umgestaltet, dass diese am AIS-Empfänger zugleich als Positionierungssignal detektiert und verwendet werden können. Das ursprüngliche AIS-Signal wird dabei nur so stark verändert, dass es weiterhin an Standard-AIS-Empfängern empfangen werden kann, d.h. es standardkonform ist.

Ein wesentlicher Vorteil der Erfindung besteht somit darin, dass die eigentliche Übertragung der AIS-Daten und AIS-Signale weiterhin AIS-standardkonform erfolgen kann, so dass sämtliche bereits im Einsatz befindlichen AIS-Empfänger und AIS-Transceiver auch die AIS-Daten eines erfindungsgemäß ausgebildeten, erweiterten AIS-Senders empfangen können, allerdings ohne Nutzung des Positionierungssignals. Für die Nutzung des Positionierungssignals zur Bestimmung der eigenen Geoposition ist allerdings ein entsprechendes Upgrade solcher AIS-Empfänger bzw. AIS-Transceiver erforderlich, um das Positionierungssignal zu empfangen und auszuwerten, was aber je nach Nutzer, Betreiber des Geräts oder Schiffsbetreiber zum jeweils geeigneten Zeitpunkt vorgenommen werden kann. Insbesondere bei Neu-Ausrüstungen von Schiffen können die erweiterten AIS-Empfänger bzw. AIS-Transceiver, die das Positionierungssignal empfangen und auswerten können, als Ausrüstung vorgesehen werden. Der hierfür erforderliche Zusatzaufwand ist vergleichsweise gering, da je nach Implementation des Hilfskanals keine Hardware-Modifikationen erforderlich sind, sondern die Erweiterung in Form von Software-Ergänzungen vorgenommen werden können, oder allenfalls geringe Hardware-Änderungen erforderlich sind. Auch eine reine Hardware-Implementation des Hilfskanals ist vorteilhaft möglich.

Als AIS-standardkonforme AIS-Signale werden hierbei insbesondere solche AIS-Signale verstanden, die die ITU Recommendation ITU-R M.1371-5 und/oder deren aktuelle Versionen erfüllen.

Die zu übertragenden AIS-Daten, die im Positionierungssignal enthaltenen Daten und die empfangenen AIS-Daten können ganz oder teilweise in Form von Binärdaten (Bits) und/oder noch nicht entschiedenen Soft-Werten solcher Binärdaten, welche zur Decodierung der AIS Daten verwendet werden (im Sinne einer Soft Decision Decodierung), realisiert sein. So können empfängerseitig z.B. Soft-Werte der empfangenen AIS-Daten und Soft-Werte der im Positionierungssignal enthaltenen Daten zur Bereitstellung der empfangenen AIS-Daten und der im Positionierungssignal enthaltenen Daten verarbeitet werden.

Der für den Hauptkanal und den Hilfskanal verwendete Begriff "Kanal" ist dabei als Kanal im nachrichtentechnischen Sinne zu verstehen, d. h. als irgendwie gearteter Übertragungsweg für die drahtlose Signalübertragung. Der Hauptkanal ist bei der AIS-Datenübertragung entsprechend dem AIS-Standard entweder der Kanal AIS1 oder der Kanal AIS2 in Verbindung mit einer bestimmten Modulationsart, wobei automatisch zwischen diesen Kanälen gewechselt wird. Als Hilfskanal kann jeder andere Teil des Signalraums, der für die AIS-Signalübertragung zugelassen ist, genutzt werden, z. B. im AIS-Frequenzbereich oder in der Nähe des AIS-Frequenzbereichs, z. B. bei freien Frequenzlücken. Als Hilfskanal kann auch ein Signalraum genutzt werden, der nicht zur Übertragung von AIS Signalen vorgesehen ist. Der Hilfskanal kann z. B. durch eine andere Modulationsart der Signalübertragung realisiert werden als die Modulationsart des Hauptkanals. Für den Hauptkanal kann als Modulationsart eine AIS-standardkonforme Modulationsart, z. B. jede Art der Frequenzumtastung (Frequency Shift Keying, FSK), genutzt werden. Insbesondere kann für den Hauptkanal die GMSK-Modulation genutzt werden (Gaussian Minimum Shift Keying). Hierdurch wird für die Übertragung der AIS-Signale nur wenig Bandbreite benötigt.

Der Hilfskanal kann aber auch anders als durch eine andere Modulationsart des Hauptkanals realisiert werden, z. B. durch eine zeitlich gemultiplexte Übertragung (zeitlicher Versatz zwischen der Übertragung der AIS-Signale und des Positionierungssignals), oder durch Nutzung des jeweils anderen AIS-Kanals, d. h. entweder AIS1 oder AIS2, je nachdem ob dieser gerade frei ist und nicht für die eigene Übertragung der AIS-Signale genutzt wird. So können insbesondere freie Zeitslots in einem der AIS-Kanäle für die Übertragung des Positionierungssignals und damit für die Realisierung des Hilfskanals genutzt werden.

Das Positionierungssignal wird somit innerhalb der AIS-Datenübertragung übertragen. Der Hilfskanal kann dementsprechend ebenfalls Teil der AIS-Datenübertragung sein. Das Positionierungssignal, das auch als Synchronisationssignal ausgebildet sein kann, kann z.B. in Form senderseitig bekannter Signalmuster zur Positionierung am Empfänger ausgebildet sein, wobei die ursprünglichen Dateninhalte der AIS-Datenübertragung, d. h. die AIS-Daten nicht verändert werden. Das Positionierungssignal kann auch als Ranging-Signal ausgebildet sein, z.B. in Form einer pseudozufälligen Sequenz (Pseudo Random Noise, PRN).

Gemäß einer vorteilhaften Weiterbildung der Erfindung ist vorgesehen, dass empfängerseitig die AIS-Signale aus dem Hauptkanal ausgewertet werden, um die empfangenen AIS-Daten zu bilden, und empfängerseitig zusätzlich das Positionierungssignal aus dem Hilfskanal ausgewertet werden, um die eigene Geoposition des AIS-Empfängers zu bestimmen. Auf diese Weise kann ein erweiterter AIS-Empfänger sowohl die AIS-Daten als auch die eigene Geoposition mittels des Positionierungssignals bestimmen. Ein noch nicht zur Auswertung des Positionierungssignals ausgerüsteter AIS-Empfänger kann dennoch die AIS-Daten wie bisher empfangen und ausgeben.

Hierbei ist die Geoposition des AIS-Senders dem AIS-Empfänger bekannt, der das Positionierungssignal auswerten möchte. Dies kann in der Weise realisiert sein, dass der AIS-Sender Teil einer Referenzstation ist, z.B. entlang einer Küste an Land aufgestellter Referenzstationen, oder die Daten "Position des Schiffs" direkt aus den empfangenen AIS-Daten entnommen werden. Im letztgenannten Fall kann der AIS-Sender auch an Bord eines Schiffs angeordnet sein, so dass nicht von einer festen Geoposition des AIS-Senders ausgegangen werden muss. Gemäß einer vorteilhaften Weiterbildung der Erfindung ist vorgesehen dass empfängerseitig die in den empfangenen AIS-Daten enthaltene "Position des Schiffs" mit der aus dem Positionierungssignal bestimmten eigenen Geoposition verglichen wird. Im AIS-Signal bzw. innerhalb der AIS-Daten ist die "Position des Schiffs", die in der Regel durch ein globales Navigationssystem wie z.B. GPS oder Galileo ermittelt wird, ohnehin enthalten. Durch die hiervon unabhängige Bestimmung der Geoposition anhand des Positionierungssignals ist eine redundante Größe vorhanden, die z.B. zur Kontrolle der über die AIS-Signale übertragene "Position des Schiffs" genutzt werden kann.

Gemäß einer vorteilhaften Weiterbildung der Erfindung ist vorgesehen, dass die über den Hauptkanal übertragenen AIS-Signale durch die Übertragung des Positionierungssignals auf dem Hilfskanal nicht oder nur insoweit beeinflusst werden, dass nicht zur Auswertung des Positionierungssignals eingerichtete AIS-Empfänger dennoch die AIS-Signale zu den empfangenen AIS-Daten wandeln können. Auf diese Weise können insbesondere vorhandene, nicht zur Auswertung des Positionierungssignals ausgerüstete AIS-Empfänger weiterhin genutzt werden und die AIS-Signale dort empfangen und zu AIS-Daten gewandelt werden. Eventuelle geringfügige Beeinflussungen der AIS-Signale im Hauptkanal durch die Datenübertragung auf dem Hilfskanal werden dabei durch ohnehin im AIS-Empfänger vorhandene Filtermaßnahmen weggefiltert.

Gemäß der Erfindung ist vorgesehen, dass die Übertragung des Positionierungssignals durch Amplitudenmodulation der AIS-Signale erfolgt. Dies erlaubt eine technisch einfach umsetzbare Realisierung des Hilfskanals. Die senderseitig bekannten Signalmuster des Positionierungssignals können somit durch eine einfache Amplitudenmodulation auf das AIS-Signal aufgebracht werden. Die AIS-Signale entsprechen weiterhin dem AIS-Standard, indem sie z.B. die zu übertragende Information in der Phasenlage des Signals beinhalten. Eine zusätzliche Amplitudenmodulation verändert diese Phasenlage nicht. Die modifizierten AIS-Signale können daher von einem Standard-AIS-Empfänger demoduliert werden. Ein erweiterter AIS-Empfänger kann die amplitudenmodulierten AIS-Signale bezüglich des inhärent enthaltenen zusätzlichen Signalmusters, nämlich des Positionierungssignals, detektieren und parallel dazu die unveränderten AIS-Daten aus den AIS-Signalen empfangen. Die mit zusätzlicher Amplitudenmodulation gemäß der Erfindung modifizierten AIS-Signale können von AIS-Basis-, Land-, bzw. Referenzstationen verwendet werden. Gegenwärtig werden AIS-Signale mit konstanter Amplitude verwendet.

Gemäß einer vorteilhaften Weiterbildung der Erfindung ist vorgesehen, dass das Positionierungssignal als Pilotsignal, als Synchronisationssignal, als pseudozufällige Signalsequenz oder als Kombination daraus ausgebildet ist. Dies hat den Vorteil, dass das Positionierungssignal auch bei schwacher oder gestörter Signalübertragung noch gut empfängerseitig zu detektieren ist.

Gemäß einer vorteilhaften Weiterbildung der Erfindung ist vorgesehen, dass empfängerseitig die Positionierungssignale wenigstens zweier unterschiedlicher AIS-Sender ausgewertet werden, um die eigene Geoposition des AIS-Empfängers zu bestimmen. Auf diese Weise kann die eigene Geoposition des AIS-Empfängers z.B. durch ein Time-of-Arrival-Erkennungsverfahren bestimmt werden. Wenn empfängerseitig die Positionierungssignale wenigstens dreier unterschiedlicher AIS-Empfänger ausgewertet werden, kann die eigene Geoposition des AIS-Empfängers gemäß einem Time-Difference-of-Arrival-Verfahren bestimmt werden, was eine noch höhere Genauigkeit ermöglicht.

Die eingangs genannte Aufgabe wird ferner gelöst durch einen AIS-Sender, der eingerichtet ist zur Ausführung der senderseitigen Verfahrensschritte eines Verfahrens der zuvor erläuterten Art. Auch hiermit können die eingangs erläuterten Vorteile realisiert werden. Die senderseitigen Verfahrensschritte sind insbesondere die Umwandlung der zu übertragenden AIS-Daten in AIS-Signale, z.B. durch Modulation, und das Aussenden dieser AIS-Signale über den Hauptkanal, ferner das Aussenden des Positionierungssignals über den Hilfskanal. Je nach Realisierung des Hilfskanals können diese Verfahrensschritte im AIS-Sender z.B. durch entsprechende Programmierung realisiert werden, d.h. durch eine Erweiterung oder Änderung der Software des AIS-Senders.

Gemäß einer vorteilhaften Weiterbildung der Erfindung ist vorgesehen, dass der AIS-Sender einen Positionierungssignalgenerator zur Erzeugung des Positionierungssignals und/oder einen Eingang zur Zuführung eines extern erzeugten Positionierungssignals aufweist, wobei der AIS-Sender einen Positionierungssignalsender aufweist, dem das Positionierungssignal zugeführt ist und der zum Aussenden des Positionierungssignals über den Hilfskanal eingerichtet ist. Der Positionierungssignalgenerator kann in Form von einem oder mehreren Schaltungs-Bauteilen (Hardware), durch eine Softwareerweiterung oder eine Kombination daraus realisiert werden.

Die eingangs genannte Aufgabe wird ferner gelöst durch einen AIS-Empfänger, der eingerichtet ist zur Ausführung der empfängerseitigen Verfahrensschritte eines Verfahrens der zuvor erläuterten Art. Auch hiermit können die eingangs erläuterten Vorteile realisiert werden. Die empfängerseitigen Verfahrensschritte sind insbesondere das Empfangen der AIS-Signale vom Hauptkanal sowie das Zurückwandeln der empfangenen AIS-Signale in empfangene AIS-Daten, z.B. durch Demodulation, ferner das Empfangen des Positionierungssignals und ggf. dessen Bereitstellung für andere Nutzer und/oder die Bestimmung der eigenen Geoposition des AIS-Empfängers. Je nach Realisierung des Hilfskanals können diese Verfahrensschritte im AIS-Empfänger z.B. durch entsprechende Programmierung realisiert werden, d.h. durch eine Erweiterung oder Änderung der Software des AIS-Empfängers.

Gemäß einer vorteilhaften Weiterbildung der Erfindung ist vorgesehen, dass der AIS-Empfänger einen Positionierungssignalempfänger aufweist, der zum Empfangen des Positionierungssignals über den Hilfskanal eingerichtet ist, wobei dem Positionierungssignalempfänger eine Positionsbestimmungseinheit nachgeordnet ist, die dazu eingerichtet ist, anhand des vom Positionierungssignalempfänger bereitgestellten Positionierungssignals aus dem Hilfskanal die eigene Geoposition des AIS-Empfängers zu bestimmen. Die Positionsbestimmungseinheit kann als Teil des AIS-Empfänger oder als davon separates Gerät ausgebildet sein.

Die zuvor erläuterten Einrichtungen, nämlich der AIS-Sender und der AIS-Empfänger, können auch Teil eines AIS-Transceivers sein, d.h. einer Einrichtung, die sowohl zum Senden als auch zum Empfangen von AIS-Signalen eingerichtet ist. Dementsprechend wird die eingangs genannte Aufgabe auch gelöst durch einen AIS-Transceiver, aufweisend einen AIS-Sender der zuvor erläuterten Art und einen AIS-Empfänger der zuvor erläuterten Art.

Die eingangs genannte Aufgabe wird ferner gelöst durch ein System von AIS-Sendern und AIS-Empfängern, aufweisend:

 a) wenigstens einen AIS-Sender der zuvor erläuterten Art,
 b) wenigstens einen AIS-Empfänger der zuvor erläuterten Art,
 c) wenigstens einen AIS-Empfänger, der keinen Positionierungssignalempfänger aufweist,

wobei die von den AIS-Sendern übertragenen AIS-Daten sowohl von AIS-Empfängern gemäß Merkmal b) als auch von AIS-Empfängern gemäß Merkmal c) empfangen und ausgewertet werden können. Auf diese Weise ist ein Mischbetrieb in dem System mit "alten" AIS-Empfängern, die nicht zur Auswertung des Positionierungssignals eingerichtet sind, und erfindungsgemäß ausgebildeten AIS-Empfängern möglich, wobei zwischen allen Teilnehmern die AIS-Daten standardkonform ausgetauscht werden können. Die Vorteile der Erfindung im Hinblick auf die unabhängige Bestimmung der eigenen Geoposition können allerdings nur bei der Datenübertragung zwischen AIS-Sendern gemäß Merkmal a) und AIS-Empfängern gemäß Merkmal b) realisiert werden. Dennoch ist die Datenübertragung weiterhin AIS-standardkonform und damit abwärtskompatibel.

Die eingangs genannte Aufgabe wird ferner gelöst durch ein Computerprogramm mit Programmcodemitteln, eingerichtet zur Durchführung der senderseitigen Verfahrensschritte und/oder der empfängerseitigen Verfahrensschritte des Verfahrens der zuvor erläuterten Art, wenn das Computerprogramm auf einem Rechner ausgeführt wird. Auch hiermit können die eingangs erläuterten Vorteile realisiert werden. Der Rechner kann z. B. ein Rechner, z.B. ein Mikrocomputer oder Mikroprozessor, eines AIS-Senders, eines AIS-Empfängers oder eines AIS-Transceivers sein.

Gemäß einer vorteilhaften Weiterbildung der Erfindung kann der Hilfskanal z.B. durch eine der nachfolgend erläuterten Ausführungsformen oder durch eine Kombination von mehreren der nachfolgend erläuterten Ausführungsformen realisiert werden:

1) Übertragung des Positionierungssignals derart, dass es im Frequenzbereich außerhalb der AIS-Signale oder dicht neben den AIS-Signalen liegt, z.B. durch OFDM-Signale (OFDM - Orthogonal Frequency-Divison Multiplexing = orthogonales Frequenzmultiplexverfahren), die dicht neben den AIS-Signalen liegen.

2) Übertragung des Positionierungssignals als Spread Spectrum Signal, das den AIS-Signalen oder anderen Signalen überlagert werden können.

3) Übertragung des Positionierungssignals durch Amplitudenmodulation der AIS-Signale.

4) Übertragung des Positionierungssignals als zusätzliches Signal im AIS-Frequenzbereich, z.B. durch Wiederholungen der AIS-Signale als Positionierungssignal.

5) Übertragung des Positionierungssignals über den jeweils anderen AIS-Kanal, der nicht für die Übertragung der AIS-Signale genutzt wird.

6) Übertragung des Positionierungssignals durch eine sonstige andere Modulationsart, die konfliktfrei der für die Übertragung der AIS-Signale genutzten Modulationsart diesen AIS-Signalen überlagert werden kann.

7) Zeitmultiplex für die Übertragung des Positionierungssignals, d.h. Übertragung zu Zeiten, zu denen keine AIS-Signale übertragen werden, z.B. freie Zeitslots der AIS-Datenübertragung.

In allen Fällen können nicht zur Auswertung des Positionierungssignals ausgerüstete AIS-Empfänger dennoch die AIS-Signale empfangen und auswerten, auch wenn es z. B. bei den oben genannten Ausführungsformen 2, 4 und 5 zu Interferenzen kommen kann, die aber im AIS-Empfänger wie ein erhöhter Rauschpegel aufgenommen werden und dementsprechend durch die Empfangsfilter oder andere Maßnahmen ausgefiltert werden. Bei der zuvor genannten Ausführungsform 3 kommt es aus Sicht des AIS-Empfängers zu Schwankungen der Signalstärke der AIS-Signale, was aber auch im Rahmen der regulären AIS-Signalübertragung auftreten kann, z. B. bei Reichweitenschwankungen, und dementsprechend nicht zur Verfälschungen führen darf.

Die Erfindung wird nachfolgend anhand von Ausführungsbeispielen unter Verwendung von Zeichnungen näher erläutert.

Es zeigen

Figur 1    eine erste Ausführungsform eines Systems von AIS-Sendern und AIS-Empfängern und

Figur 2    eine zweite Ausführungsform eines Systems von AIS-Sendern und AIS-Empfängern und

Figur 3    die Geopositions-Ermittlung eines Schiffs anhand von Landstationen und

Figur 4    die Geopositions-Ermittlung eines Schiffs anhand von anderen Schiffen.

In den Figuren werden gleiche Bezugszeichen für einander entsprechende Elemente verwendet.

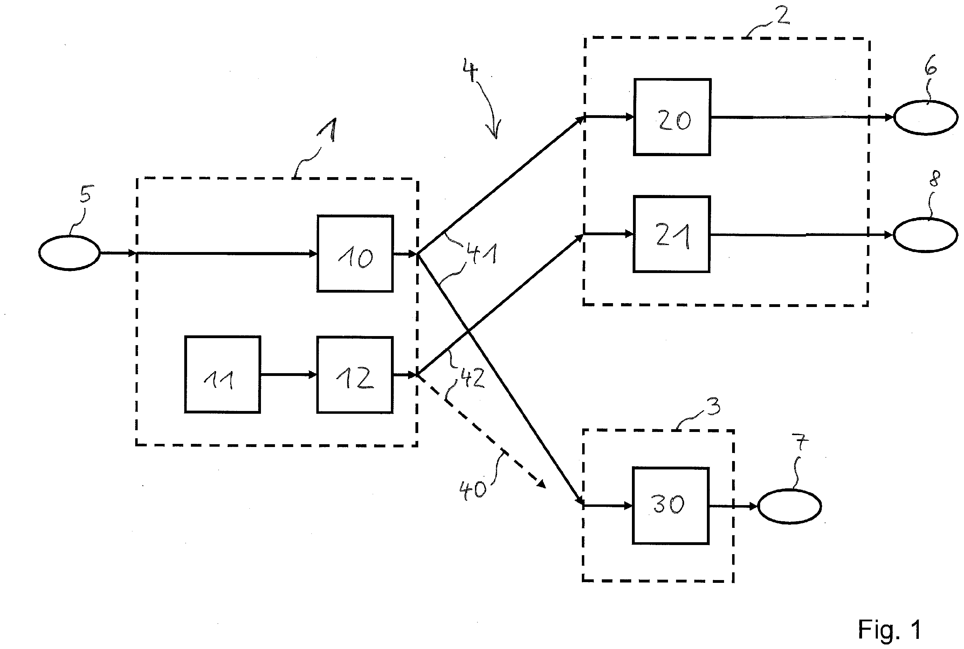

Die Figur 1 zeigt in schematischer Darstellung ein System, das einen AIS-Sender 1 sowie zwei AIS-Empfänger 2, 3 aufweist. Der AIS-Sender 1 ist erfindungsgemäß mit der senderseitigen Positionierungssignal-Übertragung ausgebildet. Der AIS-Empfänger 2 ist ebenfalls erfindungsgemäß ausgebildet, sodass er die Positionierungssignale des AIS-Senders 1 und weiterer derart ausgebildeter AIS-Sender empfangen und auswerten kann. Der AIS-Empfänger 3 ist ein Standard-AIS-Empfänger, der nicht zur Auswertung des Positionierungssignals eingerichtet ist.

Dem AIS-Sender 1 werden zu übertragende AIS-Daten 5 zugeführt, z.B. von Sensoren und/oder anderen Geräten. Als zu übertragende AIS-Daten werden beispielsweise die Schiffskennung des Schiffs, auf dem der AIS-Sender 1 eingesetzt wird, zugeführt, außerdem die Position des Schiffs in Form von geographischen Daten, die z.B. von einem globalen Navigationssystem bereitgestellt werden können.

Die zu übertragenden AIS-Daten 5 werden einem AIS-Signalgenerator 10 des AIS-Senders 1 zugeführt. Hierdurch werden die AIS-Daten 5 in AIS-Signale gewandelt, die anschließend drahtlos über den Hauptkanal 41 ausgesandt werden können, nämlich über einen der zulässigen AIS-Kanäle. In einem Positionierungssignalgenerator 11 erfolgt eine Erzeugung des Positionierungssignals, das einem Positionierungssignalsender 12 zugeführt wird, der ein aussendbares Positionierungssignal generiert, z.B. durch entsprechende Modulation. Dieses Positionierungssignal wird von dem Positionierungssignalsender 12 dann über einen zusätzlich zum Hauptkanal 41 vorhandenen Hilfskanal 42 ausgesendet.

Das Aussenden der AIS-Signale über den Hauptkanal 41 und des Positionierungssignals über den Hilfskanal 42 kann über dieselbe Antenne des AIS-Senders 1 oder über separate Antennen erfolgen.

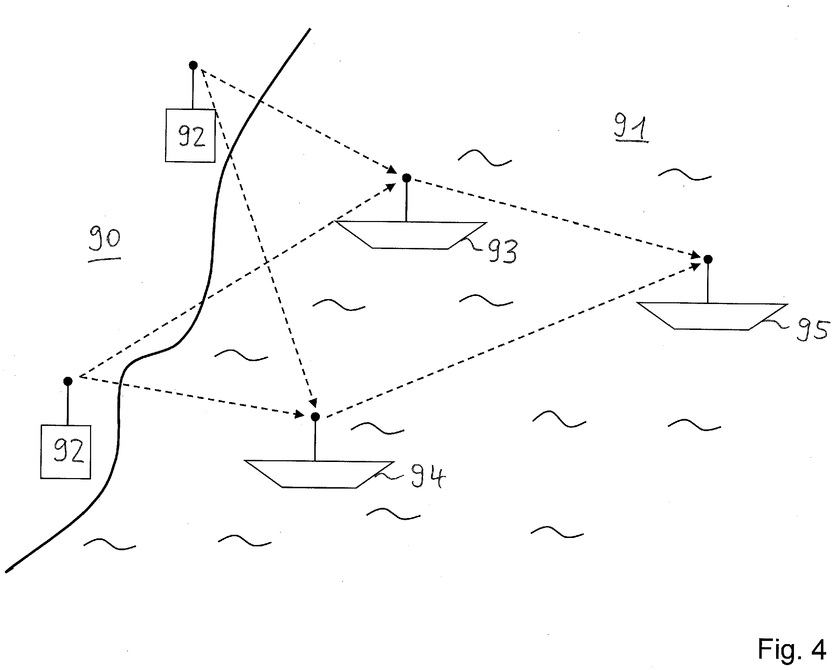

Die von dem AIS-Sender 1 über die Übertragungsstrecke 4 ausgesendeten AIS-Signale und das Positionierungssignal können grundsätzlich von jedem AIS-Empfänger in Funkreichweite empfangen werden. Ein Empfangen einschließlich einer Auswertung des Positionierungssignals ist jedoch nur durch entsprechend aufgerüstete AIS-Empfänger entsprechend dem hier dargestellten AIS-Empfänger 2 möglich. Der nach dem bisherigen Standard ausgebildete AIS-Empfänger 3 kann die über die Übertragungsstrecke 4 über den Hauptkanal 41 übertragenen AIS-Signale des AIS-Senders 1 wie bisher problemlos auswerten, d.h. über seinen AIS-Signalwandler 30 die AIS-Signale vom Hauptkanal 41 in empfangene AIS-Daten 7 wandeln und an andere Geräte ausgeben. Das über den Hilfskanal 42 übertragene Positionierungssignal mag physikalisch wohl auch an dem AIS-Empfänger 3 bzw. dessen Antenne ankommen, führt aber zu keiner weiteren Auswertung, wie in der Figur 4 durch den lediglich gestrichelt dargestellten Pfeil 40 angedeutet ist.

In dem AIS-Empfänger 2 werden die AIS-Signale vom Hauptkanal 41 ebenfalls empfangen und über einen AIS-Signalwandler 20 in empfangene AIS-Daten gewandelt, die bis auf mögliche Übertragungsfehler den AIS-Daten 5 entsprechen, und als empfangene AIS-Daten 6 abgegeben. In dem AIS-Empfänger 2 wird zusätzlich das Positionierungssignal vom Hilfskanal 42 empfangen und über einen Positionierungssignalempfänger 21 des AIS-Empfängers 2 demoduliert und als Positionierungssignal oder darin enthaltene Daten oder bereits als eigene Geoposition des AIS-Empfängers 2 als Ausgabedaten 8 bereitgestellt.

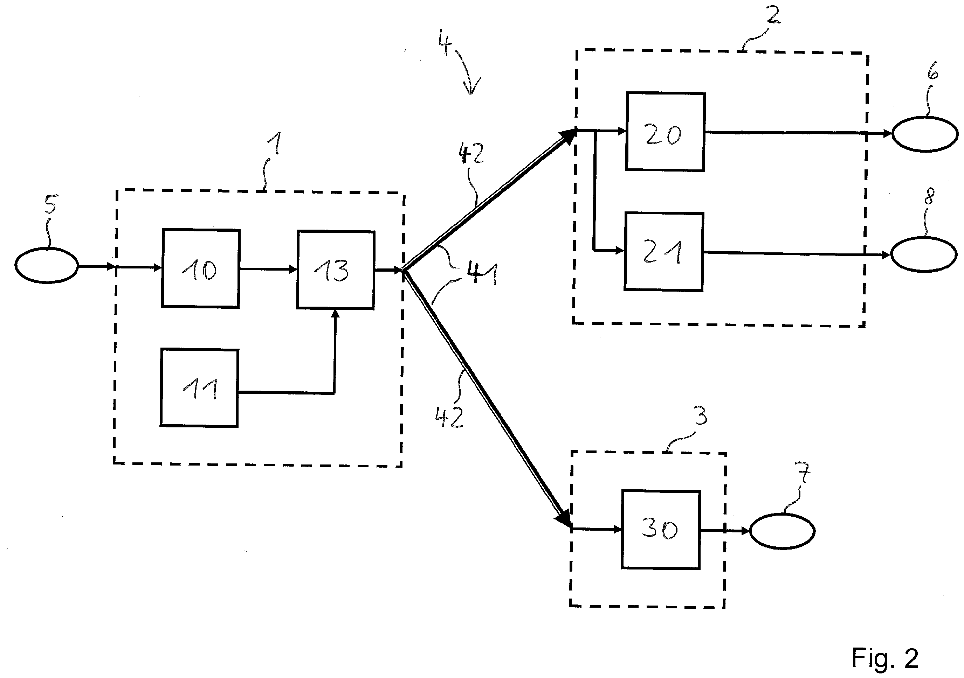

Die Erfindung umfasst, wie eingangs erläutert, auch Realisierungsmöglichkeiten, bei denen der Hilfskanal derart mit dem Hauptkanal gekoppelt ist, dass die in Figur 1 getrennt dargestellten Übertragungswege für den Hauptkanal 41 und den Hilfskanal 42 sich in der Darstellung vereinigen. Dies wird anhand des Beispiels der Figur 2 erläutert. Bei der Ausführungsform gemäß Figur 2 erfolgt die Realisierung des Hilfskanals beispielsweise durch Amplitudenmodulation der vom AIS-Sender 1 ausgesendeten AIS-Signale.

Dementsprechend ist bei Figur 2 der AIS-Sender 1 wiederum mit dem AIS-Signalwandler 10 sowie dem Positionierungssignalgenerator 11 ausgebildet. Im Unterschied zur Ausführungsform der Figur 1 werden senderseitig, d.h. im AIS-Sender 1, die vom AIS-Signalwandler 10 abgegebenen AIS-Signale in einem Modulator 13 mit dem Positionierungssignal vom Positionierungssignalgenerator 11 moduliert, z.B. entsprechend der erwähnten Amplitudenmodulation. Die auf diese Weise gewonnenen auszusendenden AIS-Signale erfüllen weiterhin die durch den AIS-Standard vorgegebenen Grenzwerte, wobei innerhalb derselben Signalübertragung der Hauptkanal 41 und der Hilfskanal 42 gebildet sind. Diese AIS-Signale werden über die Übertragungsstrecke 4 wiederum zu dem AIS-Empfänger 2 und dem AIS-Empfänger 3 übertragen.

Der AIS-Empfänger 3 ist, wie schon anhand der Figur 1 erläutert, nicht zu Auswertung des Positionierungssignals eingerichtet. Er empfängt die über die Übertragungsstrecke 4 übertragenen AIS-Signale, kann aber nur die Signalanteile des Hauptkanals 41 auswerten und wandelt diese in die empfangenen AIS-Daten 7.

Bei dem erweiterten AIS-Empfänger 2 erfolgt eine Auswertung des Positionierungssignals, das in dem über die Übertragungsstrecke 4 übertragenen Signal enthalten sind. Das zur Amplitudenmodulation verwendete Signal ist dem erweiterten AIS-Empfänger 2 bekannt. Die über die Übertragungsstrecke 4 empfangenen Signale werden in dem AIS-Empfänger 2 dem AIS-Signalwandler 20 sowie in diesem Fall zusätzlich dem Positionierungssignalempfänger 21 zugeführt. Der Positionierungssignalempfänger 21 ist in diesem Fall technisch anders ausgebildet als bei der Ausführungsform der Figur 1, da er bei der Ausführungsform der Figur 2 aus dem gemeinsamen Signal den Anteil des Positionierungssignals herausfiltern bzw. demodulieren muss.

Wie bei der Ausführungsform der Figur 1 werden die von dem AIS-Signalwandler 20 abgegebenen AIS-Daten als empfangene AIS-Daten 6 abgegeben. Vom Positionierungssignalempfänger 21 wird das wiedergewonnene Positionierungssignal oder darin enthaltene Daten oder bereits die eigene Geoposition des AIS-Empfängers 2 als Ausgabedaten 8 bereitgestellt.

Die Position der AIS-Sender 1 ist dem erweiterten AIS-Empfänger 2 bekannt, z.B. indem es sich um Referenzstationen (z.B. entlang der Küste) mit bekannten Geopositionen handelt oder die Positionsinformation direkt aus dem detektierten AIS-Signal entnommen wird.

Der Sendezeitpunkt des Positionierungssignals und insbesondere des amplitudenmodulierten AIS-Signals kann in verschiedenen Ausprägungen realisiert werden.

- Der Sendezeitpunkt kann in einem globalen Zeitreferenzsystem dem AIS-Empfänger bekannt sein. Die Referenzzeit kann beispielsweise von externen Quellen zur Verfügung gestellt werden. In diesem Fall können am erweiterten AIS-Empfänger sowohl Laufzeit- als auch Laufzeitdifferenzverfahren zur Positionierung verwendet werden.

- Der Sendezeitpunkt kann am erweiterten Empfänger nicht absolut bekannt sein. Die AIS-Sender bzw. die Referenzstationen senden dann das Signal in einem festen zeitlichen Bezug zueinander aus (z.B. gleichzeitig). In diesem Fall können am erweiterten Empfänger Laufzeitdifferenzverfahren zur Positionierung verwendet werden.

- Der Sendezeitpunkt kann beliebig sein. In diesem Fall können z.B. aus dem Mobilfunk (UMTS) bekannte Verfahren genutzt werden, die sogenannte Local Measurements Units (LMU) verwenden, um die Sendezeitpunkte zu messen. Die gemessenen Sendezeitpunkte werden über ein geeignetes Protokoll den erweiterten Empfängern zur Verfügung gestellt.

Die gemäß der Erfindung amplitudenmodulierten AIS-Signale können nicht nur von Basis-, Land-, bzw. Referenzstationen ausgesendet werden, sondern auch von jeder anderen modifizierten (erweiterten) mobilen AIS-Einheit, z.B. auf einem Schiff selbst.

Die erweiterten mobilen AIS-Einheiten haben ihre eigene Position entweder durch AIS Basis-, Land-, bzw. Referenzstationen ermittelt oder durch andere Positionierungstechniken. Diese Position wird gemäß der AIS-Spezifikation im AIS-Signal standardmäßig übertragen.

Die erweiterten mobilen AIS-Einheiten senden ihrerseits ein amplitudenmoduliertes AIS-Signal aus, welches in benachbarten erweiterten AIS-Empfängern wiederum zur Positionierung verwendet werden kann. Dadurch können bei geeigneter Nutzerdichte mit wenigen Referenzstationen große Gebiete mit einem AISbasierten Positionierungsdienst abgedeckt werden.

Das AIS System verwendet Gaussian Minimum Shift Keying (GMSK) als Modulationsverfahren. Das Sendesignal

$$s(t) = s_0 e^{-i\varphi(t)} \qquad (1)$$

im Basisband hat eine konstante Amplitude $s_0$ und beschreibt sozusagen eine mittlere Amplitude. Die zu übertragende Information ist in der reellwertigen Phasenfunktion $\varphi(t)$ und somit in der Phasenlage des Sendesignals enthalten. Erfindungsgemäß kann zusätzlich eine Modulation der Signalamplitude hinzugefügt werden, z.B. durch

$$s_0(t) = \tilde{s}_0\big(1 + a(t)\big) \qquad (2)$$

mit einer reellwertigen Zeitfunktion $a(t)$. Das Sendesignal ist somit

$$s(t) = \tilde{s}_0\big(1 + a(t)\big) e^{j\varphi(t)} \qquad (3)$$

Wählt man die Amplitude von $a(t)$ derart, dass $(1 + a(t)) \geq 0$, so wird die Phasenlage des Basisbandsignals gemäß Gleichung (1) weiterhin nur durch die Information in der Phasenfunktion $\varphi(t)$ bestimmt. Ist dieser Faktor negativ, d.h. $(1 + a(t)) < 0$, so entspräche das einer Phasenverschiebung um 180°. Mit $a(t)$ besteht nun aber die Möglichkeit zusätzlich zum AIS Signal ein weiteres Zeitsignal zu übertragen.

Dieses weitere Zeitsignal kann das Positionierungssignal (Positionierung, Ranging) sein, z.B. in Form eines am Empfänger bekannten Signals (Pilotsignal, Synchronisationssignal), beispielsweise eine pseudozufällige Sequenz (Pseudo Random Noise, PRN). Mit dessen Hilfe kann mit geeigneten Methoden, die beispielsweise aus der Satellitennavigation oder der Mobilfunkpositionierung bekannt sind eine sog. Pseudodistanz (Pseudorange) zwischen Sender und Empfänger bestimmt werden. Durch die Kombination mehrerer Pseudodistanzen kann mit bekannten Verfahren die Position des Empfängers bestimmt werden.

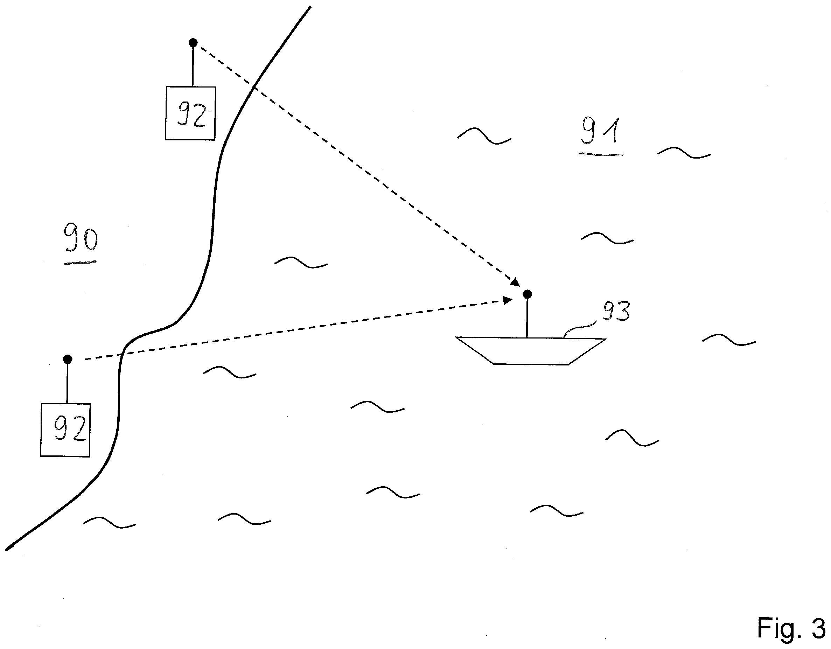

Auf diese Weise kann z.B. mittels Trilateration aus den Positionierungssignalen zweier unterschiedlicher AIS-Sender die eigene Geopositionen des AIS-Empfängers ermittelt werden. Dies ist in der Figur 3 anhand eines Beispiels dargestellt, bei dem auf einem auf See 91 befindlichen Schiff 93 die AIS-Signale von zwei AIS-Landstationen 92, die entlang einer Küste 90 angeordnet sind und sich an bekannten Positionen befinden, empfangen werden. Mittels der Trilateration aus den beiden Positionierungssignalen der AIS-Landstationen 92 bestimmt das Schiff 93 bzw. dessen AIS-Empfänger die eigene Geoposition.

Die Figur 4 zeigt ein Fallbeispiel, bei dem jeweils zwei auf See 91 befindliche Schiffe 93, 94 ihre eigene Geoposition anhand der Positionierungssignale der AIS-Landstationen 92 bestimmen. Ein drittes auf See 91 befindliches Schiff 95 empfängt die AIS-Signale der Schiffe 93, 94 und bestimmt anhand von den darin enthaltenen Positionierungssignalen, die über den Hilfskanal übertragen werden, sowie anhand der in der eigentlichen AIS-Datenübertragung vorhandenen jeweiligen "Position des Schiffs", die somit die eigene Geoposition des Schiffs 93 und des Schiffs 94 angeben, die eigene Geoposition des Schiffs 95.

**Patentansprüche**

1. Verfahren zur AIS-Datenübertragung mittels AIS-standardkonformen AIS-Signalen, wobei zu übertragende AIS-Daten (5) senderseitig in AIS-Signale gewandelt und über einen Hauptkanal (41) ausgesendet werden, wobei die AIS-Signale in einem AIS-Empfänger (2, 3) empfangen und in empfangene AIS-Daten (6, 7) zurückgewandelt werden, wobei senderseitig ein Positionierungssignal über einen zusätzlich zum Hauptkanal (41) vorhandenen Hilfskanal (42) ausgesendet wird, das empfängerseitig eine Bestimmung der eigenen Geoposition des AIS-Empfängers (2, 3) ermöglicht, **dadurch gekennzeichnet, dass** die Übertragung des Positionierungssignals durch Amplitudenmodulation der AIS-Signale erfolgt.

2. Verfahren nach dem vorhergehenden Anspruch, **dadurch gekennzeichnet, dass** empfängerseitig die AIS-Signale aus dem Hauptkanal (41) ausgewertet werden, um die empfangenen AIS-Daten (6, 7) zu bilden, und empfängerseitig zusätzlich das Positionierungssignal aus dem Hilfskanal (42) ausgewertet werden, um die eigene Geoposition des AIS-Empfängers (2, 3) zu bestimmen.

3. Verfahren nach dem vorhergehenden Anspruch, **dadurch gekennzeichnet, dass** empfängerseitig die in den empfangenen AIS-Daten (6, 7) enthaltene "Position des Schiffs" mit der aus dem Positionierungssignal bestimmten eigene Geoposition verglichen wird.

4. Verfahren nach einem der vorhergehenden Ansprüche, **dadurch gekennzeichnet, dass** die über den Hauptkanal (41) übertragenen AIS-Signale durch die Übertragung des Positionierungssignals auf dem Hilfskanal (42) nicht oder nur insoweit beeinflusst werden, dass nicht zur Auswertung des Positionierungssignals eingerichtete AIS-Empfänger (3) dennoch die AIS-Signale zu den empfangenen AIS-Daten (7) wandeln können.

5. Verfahren nach einem der vorhergehenden Ansprüche, **dadurch gekennzeichnet, dass** das Positionierungssignal als Pilotsignal, als Synchronisationssignal, als pseudozufällige Signalsequenz oder als Kombination daraus ausgebildet ist.

6. Verfahren nach einem der vorhergehenden Ansprüche, **dadurch gekennzeichnet, dass** empfängerseitig die Positionierungssignale wenigstens zweier unterschiedlicher AIS-Sender ausgewertet werden, um die eigene Geoposition des AIS-Empfängers (2, 3) zu bestimmen.

7. AIS-Sender (1), der eingerichtet ist zur Ausführung der senderseitigen Verfahrensschritte eines Verfahrens nach einem der vorhergehenden Ansprüche.

8. AIS-Sender nach Anspruch 7 **dadurch gekennzeichnet, dass** der AIS-Sender (1) einen Positionierungssignalgenerator (11) zur Erzeugung des Positionierungssignals und/oder einen Eingang zur Zuführung eines extern erzeugten Positionierungssignals aufweist, wobei der AIS-Sender (1) einen Positionierungssignalsender (12, 13) aufweist, dem das Positionierungssignal zugeführt ist und der zum Aussenden des Positionierungssignals über den Hilfskanal (42) eingerichtet ist.

9. AIS-Empfänger (2), der eingerichtet ist zur Ausführung der empfängerseitigen Verfahrensschritte eines Verfahrens nach Anspruch 2.

10. AIS-Empfänger nach dem vorhergehenden Anspruch, **dadurch gekennzeichnet, dass** der AIS-Empfänger (2) einen Positionierungssignalempfänger (21) aufweist, der zum Empfangen des Positionierungssignals über den Hilfskanal (42) eingerichtet ist, wobei dem Positionierungssignalempfänger (21) eine Positionsbestimmungseinheit (22) nachgeordnet ist, die dazu eingerichtet ist, anhand des vom Positionierungssignalempfänger (21) bereitgestellten Positionierungssignals aus dem Hilfskanal (42) die eigene Geoposition des AIS-Empfängers (2, 3) zu bestimmen.

11. AIS-Transceiver, aufweisend einen AIS-Sender (1) nach einem der Ansprüche 7 bis 8 und einen AIS-Empfänger (2) nach einem der Ansprüche 9 bis 10.

12. System von AIS-Sendern (1) und AIS-Empfängern (2, 3), aufweisend:

a) wenigstens einen AIS-Sender (1) nach einem der Ansprüche 7 bis 8,
b) wenigstens einen AIS-Empfänger (2) nach einem der Ansprüche 9 bis 10,
c) wenigstens einen AIS-Empfänger (3), der keinen Positionierungssignalempfänger (21) aufweist,

wobei die von den AIS-Sendern (1) übertragenen AIS-Daten sowohl von AIS-Empfängern (2) gemäß Merkmal b) als auch von AIS-Empfängern (3) gemäß Merkmal c) empfangen und ausgewertet werden können.

13. Computerprogramm mit Programmcodemitteln, eingerichtet zur Durchführung der senderseitigen Verfahrensschritte des Verfahrens nach einem der Ansprüche 1 bis 6, wenn das Computerprogramm auf einem Rechner eines AIS-Senders (1) ausgeführt wird.

14. Computerprogramm mit Programmcodemitteln, eingerichtet zur Durchführung der empfängerseitigen Verfahrensschritte des Verfahrens nach Anspruch 2, wenn das Computerprogramm auf einem Rechner eines AIS-Empfängers (2) ausgeführt wird.

**Claims**

1. Method for AIS data transmission by means of AIS signals compliant with the AIS standard, wherein AIS data (5) to be transmitted are converted into AIS signals at the transmitter end and are emitted via a main channel (41), wherein the AIS signals are received in an AIS receiver (2, 3) and are converted back into received AIS data (6, 7), wherein a positioning signal is emitted, at the transmitter end, via an auxiliary channel (42) which is present in addition to the main channel (41), which positioning signal makes it possible, at the receiver end, to determine the AIS receiver's (2, 3) own geo-position, **characterized in that** the positioning signal is transmitted by means of amplitude modulation of the AIS signals.

2. Method according to the preceding claim, **characterized in that** the AIS signals from the main channel (41) are evaluated at the receiver end in order to form the received AIS data (6, 7), and the positioning signal from the auxiliary channel (42) is additionally evaluated at the receiver end in order to determine the AIS receiver's (2, 3) own geo-position.

3. Method according to the preceding claim, **characterized in that** the "position of the ship" contained in the received AIS data (6, 7) is compared, at the receiver end, with the own geo-position determined from the positioning signal.

4. Method according to one of the preceding claims, **characterized in that** the AIS signals transmitted via the main channel (41) are not influenced or are only influenced by the transmission of the positioning signal on the auxiliary channel (42) to such an extent that AIS receivers (3) which are not set up to evaluate the positioning signal can nevertheless convert the AIS signals to form the received AIS data (7).

5. Method according to one of the preceding claims, **characterized in that** the positioning signal is in the form of a pilot signal, a synchronization signal, a pseudo-random signal sequence or a combination thereof.

6. Method according to one of the preceding claims, **characterized in that** the positioning signals from at least two different AIS transmitters are evaluated, at the receiver end, in order to determine the AIS receiver's (2, 3) own geo-position.

7. AIS transmitter (1) which is set up to carry out the transmitter-end method steps of a method according to one of the preceding claims.

8. AIS transmitter according to Claim 7, **characterized in that** the AIS transmitter (1) has a positioning signal generator (11) for generating the positioning signal and/or an input for supplying an externally generated positioning signal, wherein the AIS transmitter (1) has a positioning signal transmitter (12, 13), to which the positioning signal is supplied and which is set up to emit the positioning signal via the auxiliary channel (42).

9. AIS receiver (2) which is set up to carry out the receiver-end method steps of a method according to Claim 2.

10. AIS receiver according to the preceding claim, **characterized in that** the AIS receiver (2) has a positioning signal receiver (21) which is set up to receive the positioning signal via the auxiliary channel (42), wherein a position determination unit (22) is arranged downstream of the positioning signal receiver (21) and is set up to determine the AIS receiver's (2, 3) own geo-position on the basis of the positioning signal from the auxiliary channel (42) which is provided by the positioning signal receiver (21).

11. AIS transceiver having an AIS transmitter (1) according to one of Claims 7 to 8 and an AIS receiver (2) according to one of Claims 9 to 10.

12. System of AIS transmitters (1) and AIS receivers (2, 3), having:

     a) at least one AIS transmitter (1) according to one of Claims 7 to 8,
     b) at least one AIS receiver (2) according to one of Claims 9 to 10,
     c) at least one AIS receiver (3) which does not have a positioning signal receiver (21),

wherein the AIS data transmitted by the AIS transmitters (1) can be received and evaluated both by AIS receivers (2) according to feature b) and by AIS receivers (3) according to feature c).

13. Computer program having program code means set up to carry out the transmitter-end method steps of the method according to one of Claims 1 to 6 when the computer program is executed on a computer of an AIS transmitter (1).

14. Computer program having program code means set up to carry out the receiver-end method steps of the method according to Claim 2 when the computer program is executed on a computer of an AIS receiver (2) .

## Revendications

1. Procédé de transmission de données AIS au moyen de signaux AIS conformes à la norme AIS, dans lequel les données AIS (5) à transmettre sont converties en signaux AIS côté émetteur et émises par l'intermédiaire d'un canal principal (41), dans lequel les signaux AIS sont reçus dans un récepteur AIS (2, 3) et reconvertis en données AIS reçues (6, 7), dans lequel un signal de positionnement est émis côté émetteur par l'intermédiaire d'un canal auxiliaire (42) qui est présent en plus du canal principal (41) et qui permet de déterminer côté récepteur la position géographique propre du récepteur AIS (2, 3), **caractérisé en ce que** la transmission du signal de positionnement s'effectue par modulation d'amplitude des signaux AIS.

2.  Procédé selon la revendication précédente, **caractérisé en ce que** les signaux AIS provenant du canal principal (41) sont évalués côté récepteur pour obtenir les données AIS reçues (6, 7) et **en ce que** le signal de positionnement provenant du canal auxiliaire (42) est également évalué côté récepteur pour déterminer la position géographique propre du récepteur AIS (2, 3).

3.  Procédé selon la revendication précédente, **caractérisé en ce que** la "position du navire" contenue dans les données AIS reçues (6, 7) est comparée côté récepteur à la position géographique propre déterminée à partir du signal de positionnement.

4.  Procédé selon l'une des revendications précédentes, **caractérisé en ce que** les signaux AIS transmis par l'intermédiaire du canal principal (41) ne sont pas influencés par la transmission du signal de positionnement sur le canal auxiliaire (42) ou ne le sont que dans une mesure telle que des récepteurs AIS (3) non conçus pour évaluer le signal de positionnement peuvent néanmoins convertir les signaux AIS en données AIS reçues (7) .

5.  Procédé selon l'une des revendications précédentes, **caractérisé en ce que** le signal de positionnement est configuré sous la forme d'un signal pilote, d'un signal de synchronisation, d'une séquence de signaux pseudoaléatoires ou d'une combinaison de ceux-ci.

6.  Procédé selon l'une des revendications précédentes, **caractérisé en ce que** les signaux de positionnement d'au moins deux émetteurs AIS différents sont évalués côté récepteur afin de déterminer la position géographique propre du récepteur AIS (2, 3).

7.  Émetteur AIS (1) conçu pour exécuter les étapes de procédé côté émetteur d'un procédé selon l'une des revendications précédentes.

8.  Émetteur AIS selon la revendication 7, **caractérisé en ce que** l'émetteur AIS (1) comporte un générateur de signal de positionnement (11) destiné à générer le signal de positionnement et/ou une entrée destinée à délivrer un signal de positionnement généré extérieurement, dans lequel l'émetteur AIS (1) comporte un émetteur de signal de positionnement (12, 13) auquel est délivré le signal de positionnement et qui est conçu pour émettre le signal de positionnement par l'intermédiaire du canal auxiliaire (42).

9.  Récepteur AIS (2) conçu pour exécuter les étapes de procédé côté récepteur d'un procédé selon la revendication 2.

10. Récepteur AIS selon la revendication précédente, **caractérisé en ce que** le récepteur AIS (2) comprend un récepteur de signal de positionnement (21) conçu pour recevoir le signal de positionnement par l'intermédiaire du canal auxiliaire (42), dans lequel il est prévu en aval du récepteur de signal de positionnement (21) une unité de détermination de position (22) qui est conçue pour déterminer la position géographique propre du récepteur AIS (2, 3) sur la base du signal de positionnement fourni par le récepteur de signal de positionnement (21) à partir du canal auxiliaire (42).

11. Émetteur-récepteur AIS comportant un émetteur AIS (1) selon l'une des revendications 7 à 8 et un récepteur AIS (2) selon l'une des revendications 9 à 10.

12. Système d'émetteurs AIS (1) et de récepteurs AIS (2, 3), comportant :

    a) au moins un émetteur AIS (1) selon l'une des revendications 7 à 8,
    b) au moins un récepteur AIS (2) selon l'une des revendications 9 à 10,
    c) au moins un récepteur AIS (3) qui ne comporte aucun récepteur de signal de positionnement (21),

    dans lequel les données AIS transmises par les émetteurs AIS (1) peuvent être reçues et évaluées à la fois par des récepteurs AIS (2) conformes à la caractéristique b) et par des récepteurs AIS (3) conformes à la caractéristique c) .

13. Programme d'ordinateur comportant des moyens à code de programme conçus pour effectuer les étapes de procédé côté émetteur du procédé selon l'une des revendications 1 à 6 lorsque le programme d'ordinateur est exécuté sur un calculateur d'un émetteur AIS (1).

14. Programme d'ordinateur comportant des moyens à code de programme conçus pour effectuer les étapes de procédé côté récepteur du procédé selon la revendication 2 lorsque le programme d'ordinateur est exécuté sur un calculateur d'un récepteur AIS (2).

Fig. 1

Fig. 2

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **GREGORY JOHNSON et al.** *Feasibility Study of R-Mode using AIS Transmissions. Investigation of possible methods to implement a precise GNSS independent timing signal for AIS transmissions,* 29. August 2014